# EUROPEAN PATENT APPLICATION

(11) **EP 4 692 838 A1**
(43) Date of publication of application: **11.02.2026**
(21) Application number: 24847886.9
(22) Date of filing: 26.06.2024
(51) Int. Cl.: G01S 5/18, B60R 11/02

(54) **ELECTRONIC DEVICE AND POSITIONING METHOD THEREFOR, AND MEDIUM**

(30) Priority: 28.07.2023 CN 202310953507
(71) Applicant: Huawei Technologies Co., Ltd., Shenzhen, Guangdong 518129 (CN)
(72) Inventor: XIE, Dianhan, Shenzhen, Guangdong 518129 (CN); ZHOU, Yan, Shenzhen, Guangdong 518129 (CN); ZHENG, Bowen, Shenzhen, Guangdong 518129 (CN); WANG, Shuai, Shenzhen, Guangdong 518129 (CN)
(74) Representative: MERH-IP Matias Erny Reichl Hoffmann Patentanwälte PartG mbB
(86) International application number: PCT/CN2024/101654
(87) International publication number: WO 2025/025925

(57) **Abstract**

An electronic device, a method for positioning the electronic device, and a medium are provided, and relate to the field of intelligent driving technologies. The positioning method includes: obtaining an ultrasonic detection signal that is sent by at least one signal source and received by a mobile terminal; determining, based on the ultrasonic detection signal, a target signal source that has sent the ultrasonic detection signal; and determining a target location of the mobile terminal in a vehicle based on a location of the determined target signal source in a cabin of the vehicle. In the foregoing positioning method, the ultrasonic detection signal is played by existing signal sources in the cabin of the vehicle, and signal characteristics of the ultrasonic detection signals received by the mobile terminal are compared to distinguish between different signal sources that have played the ultrasonic detection signals. Then the precise location of the mobile terminal is determined based on a sequence of time points at which the ultrasonic detection signals are received by the mobile terminal and a layout of a speaker in the cabin of the vehicle, thereby reducing costs and ensuring accuracy of positioning the mobile terminal.

## Description

This application claims priority to Chinese Patent Application No. 202310953507.8, filed with the China National Intellectual Property Administration on July 28, 2023 and entitled "ELECTRONIC DEVICE, POSITIONING METHOD THEREOF, AND MEDIUM", which is incorporated herein by reference in its entirety.

### TECHNICAL FIELD

This application relates to the field of intelligent driving technologies, and in particular, to an electronic device, a method for positioning the electronic device, and a medium.

### BACKGROUND

With development of intelligent vehicles, a plurality of in-vehicle devices (for example, a plurality of display screens and speakers) are usually disposed in a cabin of an intelligent vehicle to improve user experience of a driver and passengers. For a mobile terminal of the driver or a passenger to interact with the in-vehicle device in the cabin or for control over the mobile terminal of the passenger through a head unit, a location of the mobile terminal in the cabin needs to be determined. However, in conventional wireless signal positioning technologies, such as Wi-Fi positioning, Bluetooth positioning, and ultra-wideband (ultra-wideband, UWB) positioning, usually an additional signal device needs to be deployed in the cabin in advance, and positioning implementation costs are high. In addition, Wi-Fi positioning and Bluetooth positioning have a problem of low precision. In particular, for a cabin having small space, using Wi-Fi positioning and Bluetooth positioning can only determine that the mobile terminal is in the cabin but cannot exactly determine the specific location (for example, a front passenger seat, a left seat in a rear row, or a right seat in a rear row) of the mobile terminal in the cabin, calling for a low-cost and high-accuracy positioning solution for positioning the mobile terminal in the cabin.

### SUMMARY

This application provides an electronic device, a method for positioning the electronic device, and a medium.

According to a first aspect, this application provides a positioning method, applied to an electronic device. The method includes:
obtaining an ultrasonic detection signal that is sent by at least one signal source and received by a mobile terminal, where the electronic device and the at least one signal source are located in a cabin of a vehicle;
determining, based on the ultrasonic detection signal, a target signal source that has sent the ultrasonic detection signal; and
determining a target location of the mobile terminal in the cabin of the vehicle based on a location of the determined target signal source in the cabin of the vehicle.

In this application, the electronic device and the mobile terminal herein may include various electronic devices capable of supporting wireless communication connections or wired communication connections. For example, the electronic device may include an in-vehicle device and a head unit in the cabin of the vehicle, and the mobile terminal may include a mobile phone, a tablet computer, a notebook computer, and a wearable device that are carried by a user. The signal source herein may be a speaker in the cabin of the vehicle (the cabin of the automobile). The ultrasonic detection signal herein is a sound wave whose frequency range is from 17 kHz to 24 kHz, and this ultrasonic wave has a frequency beyond a frequency range (20 Hz to 15 kHz) perceptible by a normal human ear and does not generate noise so that user experience is not affected.

The ultrasonic detection signal played by the signal source disposed in the cabin of the vehicle has a respective unique signal characteristic. The electronic device may obtain a signal characteristic of the ultrasonic detection signal received by the mobile terminal, to determine the target signal source corresponding to the ultrasonic detection signal, namely, a speaker that has played the ultrasonic detection signal, and determine the target location of the mobile terminal in the vehicle based on the location of the target signal source in the cabin of the vehicle. The signal characteristic herein may be preset.

It can be learned that, existing signal sources, such as speakers, in the cabin of the vehicle are employed, and each speaker is controlled to play the ultrasonic detection signal, and the signal characteristics of the ultrasonic detection signals received by the mobile terminal are compared to distinguish between different speakers that have played the ultrasonic detection signals. Then a relative location relationship between the mobile terminal and the speaker is determined based on a sequence of time points at which ultrasonic detection signals are received by the mobile terminal, and is combined with a layout of the speakers in the cabin of the vehicle to determine the precise location of the mobile terminal. No additional signal device needs to be added in the cabin of the vehicle, thereby reducing costs and ensuring accuracy of positioning the mobile terminal.

In a possible implementation of the first aspect, the method further includes:
when the electronic device communicates with the mobile terminal, controlling a plurality of signal sources in the cabin of the vehicle to send the ultrasonic detection signals.

In this application, that the electronic device communicates with the mobile terminal may include: The user carrying the mobile terminal enters the cabin of the vehicle, or the mobile terminal accesses a network of the vehicle, or the mobile terminal accesses a network of the vehicle, or a door of the cabin of the vehicle is opened.

In a possible implementation of the first aspect, controlling the plurality of signal sources in the cabin of the vehicle to send the ultrasonic detection signals includes:
controlling each of the plurality of signal sources to simultaneously send an ultrasonic detection signal group in a first sending period, where there is at least one measurement signal in the ultrasonic detection signal group sent by the different signal sources, and time at which the different signal sources send the measurement signal is different; and
determining, based on the ultrasonic detection signal, the target signal source that has sent the ultrasonic detection signal includes:
   determining, based on the measurement signal in the ultrasonic detection signal group received by the mobile terminal, a target signal source that has sent the ultrasonic detection signal group.

In this application, the first sending period herein may be duration in which the signal source sends/plays an ultrasonic detection signal, namely, duration in which the signal source sends/plays an ultrasonic detection signal group. The electronic device may control all of the signal sources to simultaneously send/play the ultrasonic detection signal group. The ultrasonic detection signal group may successively include at least two identification signals (which may also be referred to as a start signal and an end signal) and one measurement signal, and a time interval between the two identification signals represents the first sending period. Herein, that the time at which the different signal sources send the measurement signal is different means: In the ultrasonic detection signal group sent/played by the different signal sources, a time interval between the start signal and the measurement signal varies, that is, a signal time interval varies. The time interval between the start signal and the measurement signal herein may represent a signal characteristic of the ultrasonic detection signal corresponding to the signal source. Herein, determining, based on the measurement signal in the ultrasonic detection signal group received by the mobile terminal, the target signal source that has sent the ultrasonic detection signal group means: The signal source corresponding to the ultrasonic detection signal group may be determined based on the time interval between the start signal and the measurement signal in the ultrasonic detection signal group.

In a possible implementation of the first aspect, the ultrasonic detection signal group includes the start signal, the measurement signal, and the end signal.

The start signal is sent at a start moment of the first sending period, the end signal is sent at an end moment of the first sending period, the measurement signal is sent at an identification moment between the start moment and the end moment.

In the ultrasonic detection signal group sent by the different signal sources, a time interval between the identification moment and the start moment or the end moment varies.

In this application, the ultrasonic detection signal group herein may successively include one identification signal (which may also be referred to as the start signal), one measurement signal, and one identification signal (which may also be referred to as the end signal). In other words, the signal source successively sends/plays the start signal at the start moment, sends/plays the measurement signal at the identification moment, and sends/plays the end signal at the end moment. In the ultrasonic detection signal group sent by the different signal sources, the time interval between the identification moment and the start moment or the end moment varies. The time interval herein may be a unique signal characteristic of the ultrasonic detection signal group sent by each signal source.

In a possible implementation of the first aspect, determining, based on the measurement signal in the ultrasonic detection signal group received by the mobile terminal, the target signal source that has sent the ultrasonic detection signal group includes:
determining that, in each ultrasonic detection signal group received by the mobile terminal, a time interval between sending time of the start signal and sending time of the measurement signal is a first time interval; and
determining that the first time interval is the same as a second time interval corresponding to a first signal source in the plurality of signal sources, and using the first signal source as the target signal source.

In this application, determining that, in each ultrasonic detection signal group received by the mobile terminal, the time interval between the sending time of the start signal and the sending time of the measurement signal is the first time interval means: In each ultrasonic detection signal group received by the mobile terminal, the time interval between the identification moment and the start moment or the end moment is the first time interval, that is, all of the ultrasonic detection signal groups are from a same signal source. In this way, the first signal source corresponding to the second time interval that is the same as the first time interval is determined, through comparison with the time interval preset for the ultrasonic detection signal group to be sent/played by each signal source, as the target signal source.

In a possible implementation of the first aspect, the method further includes:
determining that, in all ultrasonic detection signal groups received by the mobile terminal, time intervals between sending time of the start signals and sending time of the measurement signals include a third time interval and a fourth time interval, and
in an ultrasonic detection signal group received by the mobile terminal for the first time, a time interval between sending time of the start signal and sending time of the measurement signal is the third time interval; and
determining that the third time interval is the same as a fifth time interval corresponding to a second signal source in the plurality of signal sources, and using the second signal source as the target signal source.

In this application, determining that, in all ultrasonic detection signal groups received by the mobile terminal, the time intervals between the sending time of the start signals and the sending time of the measurement signals include the third time interval and the fourth time interval means: In each ultrasonic detection signal group received by the mobile terminal, the time interval between the identification moment and the start moment or the end moment varies, that is, at least the third time interval and the fourth time interval exist. That in the ultrasonic detection signal group received by the mobile terminal for the first time, the time interval between the sending time of the start signal and the sending time of the measurement signal is the third time interval means: The mobile terminal has received an ultrasonic detection signal group corresponding to the third time interval earlier than an ultrasonic detection signal group corresponding to the fourth time interval, that is, the mobile terminal is closer to a signal source that has sent/played the ultrasonic detection signal group corresponding to the third time interval, and the signal source that has sent/played the ultrasonic detection signal group corresponding to the third time interval is determined as the target signal source.

In a possible implementation of the first aspect, determining the target location of the mobile terminal in the cabin of the vehicle based on the location of the determined target signal source in the cabin of the vehicle includes:
using the location of the target signal source in the cabin of the vehicle as the target location of the mobile terminal.

In this application, if the location of the target signal source is a left passenger seat in a second row in the cabin of the vehicle, it is determined that the target location of the mobile terminal is also the left passenger seat in the second row.

In a possible implementation of the first aspect, that the electronic device communicates with the mobile terminal includes:
the mobile terminal accesses a local area network covering the cabin of the vehicle.

In a possible implementation of the first aspect, the method further includes:
detecting that a door of the cabin of the vehicle is opened.

In this application, that the electronic device communicates with the mobile terminal may include: The user carrying the mobile terminal enters the cabin of the vehicle, or the mobile terminal accesses a network of the vehicle, or the mobile terminal accesses a network of the vehicle, or a door of the cabin of the vehicle is opened.

In a possible implementation of the first aspect, the electronic device is a vehicle head unit of the cabin of the vehicle.

According to a second aspect, this application provides a positioning method, applied to an electronic device. The method includes:
receiving an ultrasonic detection signal sent by at least one signal source, where the at least one signal source is located in a cabin of a vehicle;
determining, based on the ultrasonic detection signal, a target signal source that has sent the ultrasonic detection signal; and
determining a target location of the electronic device in the cabin of the vehicle based on a location of the determined target signal source in the cabin of the vehicle.

In this application, the electronic device herein may include a mobile phone, a tablet computer, a notebook computer, a wearable device, and the like that are carried by a user. The signal source herein may be a speaker in the cabin of the vehicle. The ultrasonic detection signal herein has a frequency beyond a frequency range perceptible by a normal human ear and does not generate noise so that user experience is not affected.

The ultrasonic detection signal played by the signal source disposed in the cabin of the vehicle has a respective unique signal characteristic. The electronic device may determine, based on a signal characteristic of the received ultrasonic detection signal, the target signal source corresponding to the ultrasonic detection signal, namely, a speaker that has played the ultrasonic detection signal, and determine the target location of the mobile terminal in the vehicle based on the location of the target signal source in the cabin of the vehicle. The signal characteristic herein may be preset.

It can be learned that, existing signal sources, such as speakers, in the cabin of the vehicle are employed, and each speaker is controlled to play the ultrasonic detection signal, and the signal characteristics of the ultrasonic detection signals received by the electronic device are compared to distinguish between different speakers that have played the ultrasonic detection signals. Then a relative location relationship between the electronic device and the speaker is determined based on a sequence of time points at which the ultrasonic detection signals are received, and is combined with a layout of the speakers in the cabin of the vehicle to determine the precise location of the electronic device. No additional signal device needs to be added in the cabin of the vehicle, thereby reducing costs and ensuring accuracy of positioning the electronic device.

In a possible implementation of the second aspect, the method further includes:
when the electronic device communicates with a control end of the cabin of the vehicle, the control end controls a plurality of signal sources in the cabin of the vehicle to send the ultrasonic detection signals.

In this application, the control end herein may include an in-vehicle device, a vehicle head unit, and the like in the cabin of the vehicle. That the electronic device communicates with the control end may include: The user carrying the electronic device enters the cabin of the vehicle, or the electronic device accesses a network of the vehicle, or the electronic device accesses a network of the vehicle, or a door of the cabin of the vehicle is opened.

In a possible implementation of the second aspect, that the control end controls the plurality of signal sources in the cabin of the vehicle to send the ultrasonic detection signals includes:
the control end controls each of the plurality of signal sources to simultaneously send an ultrasonic detection signal group in a first sending period, where there is at least one measurement signal in the ultrasonic detection signal group sent by the different signal sources, and time at which the different signal sources send the measurement signal is different; and
determining, based on the ultrasonic detection signal, the target signal source that has sent the ultrasonic detection signal includes:
   the electronic device determines, based on the measurement signal in the received ultrasonic detection signal group, a target signal source that has sent the ultrasonic detection signal group.

In this application, the first sending period herein may be duration in which the signal source sends/plays an ultrasonic detection signal, namely, duration in which the signal source sends/plays an ultrasonic detection signal group. The control end may control all of the signal sources to simultaneously send/play the ultrasonic detection signal group. The ultrasonic detection signal group may successively include at least two identification signals (which may also be referred to as a start signal and an end signal) and one measurement signal, and a time interval between the two identification signals represents the first sending period. Herein, that the time at which the different signal sources send the measurement signal is different means: In the ultrasonic detection signal group sent/played by the different signal sources, a time interval between the start signal and the measurement signal varies, that is, a signal time interval varies. The time interval between the start signal and the measurement signal herein may represent a signal characteristic of the ultrasonic detection signal corresponding to the signal source. Herein, determining, based on the measurement signal in the ultrasonic detection signal group received by the electronic device, the target signal source that has sent the ultrasonic detection signal group means: The signal source corresponding to the ultrasonic detection signal group may be determined based on the time interval between the start signal and the measurement signal in the ultrasonic detection signal group.

In a possible implementation of the second aspect, the ultrasonic detection signal group includes the start signal, the measurement signal, and the end signal.

The start signal is sent at a start moment of the first sending period, the end signal is sent at an end moment of the first sending period, the measurement signal is sent at an identification moment between the start moment and the end moment.

In the ultrasonic detection signal group sent by the different signal sources, a time interval between the identification moment and the start moment or the end moment varies.

In this application, the ultrasonic detection signal group herein may successively include one identification signal (which may also be referred to as the start signal), one measurement signal, and one identification signal (which may also be referred to as the end signal). In other words, the signal source successively sends/plays the start signal at the start moment, sends/plays the measurement signal at the identification moment, and sends/plays the end signal at the end moment. In the ultrasonic detection signal group sent by the different signal sources, the time interval between the identification moment and the start moment or the end moment varies. The time interval herein may be a unique signal characteristic of the ultrasonic detection signal group sent by each signal source.

In a possible implementation of the second aspect, that the electronic device determines, based on the measurement signal in the received ultrasonic detection signal group, the target signal source that has sent the ultrasonic detection signal group includes:
determining that, in each received ultrasonic detection signal group, a time interval between sending time of the start signal and sending time of the measurement signal is a first time interval; and
determining that the first time interval is the same as a second time interval corresponding to a first signal source in the plurality of signal sources, and using the first signal source as the target signal source.

In this application, determining that, in each ultrasonic detection signal group received by the electronic device, the time interval between the sending time of the start signal and the sending time of the measurement signal is the first time interval means: In each ultrasonic detection signal group received by the electronic device, the time interval between the identification moment and the start moment or the end moment is the first time interval, that is, all of the ultrasonic detection signal groups are from a same signal source. In this way, the first signal source corresponding to the second time interval that is the same as the first time interval is determined, through comparison with the time interval preset for the ultrasonic detection signal group to be sent/played by each signal source, as the target signal source.

In a possible implementation of the second aspect, the method further includes:
determining that, in all received ultrasonic detection signal groups, time intervals between sending time of the start signals and sending time of the measurement signals include a third time interval and a fourth time interval, and
in an ultrasonic detection signal group received for the first time, a time interval between sending time of the start signal and sending time of the measurement signal is the third time interval; and
determining that the third time interval is the same as a fifth time interval corresponding to a second signal source in the plurality of signal sources, and using the second signal source as the target signal source.

In this application, determining that, in all ultrasonic detection signal groups received by the electronic device, the time intervals between the sending time of the start signals and the sending time of the measurement signals include the third time interval and the fourth time interval means: In each ultrasonic detection signal group received by the electronic device, the time interval between the identification moment and the start moment or the end moment varies, that is, at least the third time interval and the fourth time interval exist. That in the ultrasonic detection signal group received by the electronic device for the first time, the time interval between the sending time of the start signal and the sending time of the measurement signal is the third time interval means: The electronic device has received an ultrasonic detection signal group corresponding to the third time interval earlier than an ultrasonic detection signal group corresponding to the fourth time interval, that is, the electronic device is closer to a signal source that has sent/played the ultrasonic detection signal group corresponding to the third time interval, and the signal source that has sent/played the ultrasonic detection signal group corresponding to the third time interval is determined as the target signal source.

In a possible implementation of the second aspect, determining the target location of the electronic device in the cabin of the vehicle based on the location of the determined target signal source in the cabin of the vehicle includes:
using the location of the target signal source in the cabin of the vehicle as the target location of the electronic device.

In this application, if the location of the target signal source is a left passenger seat in a second row in the cabin of the vehicle, it is determined that the target location of the electronic device is also the left passenger seat in the second row.

In a possible implementation of the second aspect, that the electronic device communicates with the control end of the cabin of the vehicle includes:
the electronic device accesses a local area network covering the cabin of the vehicle.

In a possible implementation of the second aspect, the method further includes:
detecting that a door of the cabin of the vehicle is opened.

In this application, that the electronic device communicates with the control end may include: The user carrying the electronic device enters the cabin of the vehicle, or the electronic device accesses a network of the vehicle, or the electronic device accesses a network of the vehicle, or a door of the cabin of the vehicle is opened.

In a possible implementation of the second aspect, the electronic device includes at least one of a mobile phone and a tablet computer, and the control end includes a vehicle head unit of the cabin of the vehicle.

According to a third aspect, this application provides an electronic device, including:
a memory, configured to store instructions to be executed by one or more processors of the electronic device, and
the processor, which is one of the processors of the electronic device and configured to perform the positioning method according to the first aspect and the second aspect.

According to a fourth aspect, this application provides a readable medium. The readable medium stores instructions. When the instructions are executed on an electronic device, the electronic device is enabled to perform the positioning method in the first aspect and the second aspect.

According to a fifth aspect, this application provides a computer program product, including a non-volatile computer-readable storage medium. The non-volatile computer-readable storage medium includes computer program code used to perform the positioning method in the first aspect and the second aspect.

### BRIEF DESCRIPTION OF DRAWINGS

FIG. 1(a) to FIG. 1(c) are diagrams of a scenario in which a location of a mobile terminal in a cabin is determined according to an embodiment of this application;
FIG. 2 is a diagram of a scenario in which a location of a mobile terminal in a cabin is determined in a Wi-Fi positioning manner according to an embodiment of this application;
FIG. 3(a) is a diagram of simultaneously and periodically playing an ultrasonic detection signal by speakers according to an embodiment of this application;
FIG. 3(b) is a diagram of an ultrasonic detection signal received by a mobile terminal according to an embodiment of this application;
FIG. 4 is a diagram of a structure of an electronic device according to an embodiment of this application;
FIG. 5 is a block diagram of a software structure of an electronic device according to an embodiment of this application;
FIG. 6A and FIG. 6B are a schematic flowchart of a positioning method according to an embodiment of this application;
FIG. 7A and FIG. 7B are diagrams of simultaneously and periodically playing ultrasonic detection signals by speakers and receiving the ultrasonic detection signals by mobile terminals according to an embodiment of this application; and
FIG. 8(a) and FIG. 8(b) are diagrams of determining a location of a mobile terminal by using a time difference of arrival positioning algorithm according to an embodiment of this application.

### DESCRIPTION OF EMBODIMENTS

The following describes technical solutions in embodiments of this application clearly and completely with reference to the accompanying drawings.

It may be understood that the technical manner of this application is applicable to various electronic devices capable of supporting wireless communication connections or wired communication connections, including an in-vehicle device and a mobile terminal, for example, a mobile phone, a tablet computer, a notebook computer, a wearable device, a vehicle head unit, or a speaker.

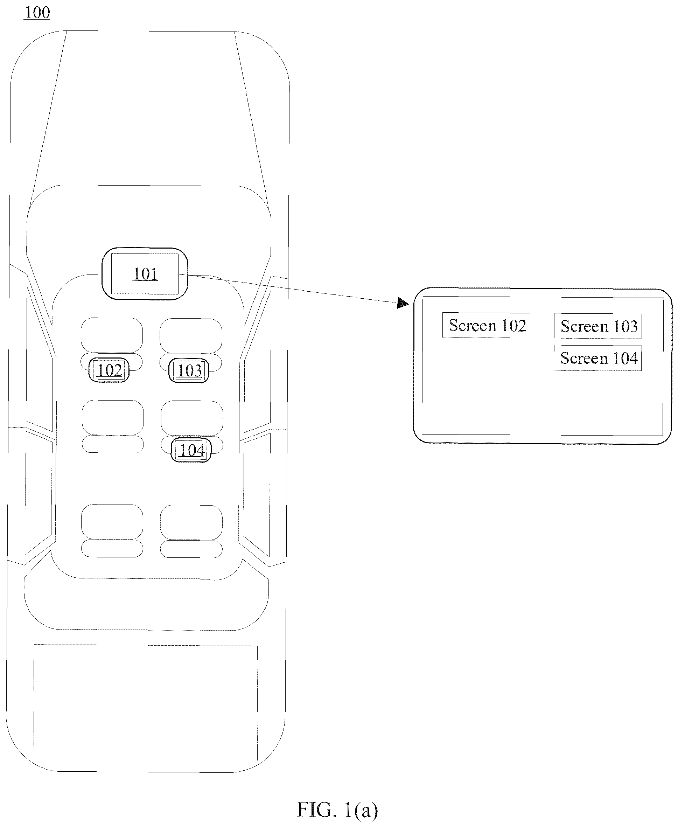

Refer to FIG. 1(a) to FIG. 1(c). FIG. 1(a) to FIG. 1(c) are diagrams of an example of a scenario in which a location of a mobile terminal in a cabin is determined to implement interaction between the mobile terminal and an in-vehicle device in the cabin according to an embodiment of this application.

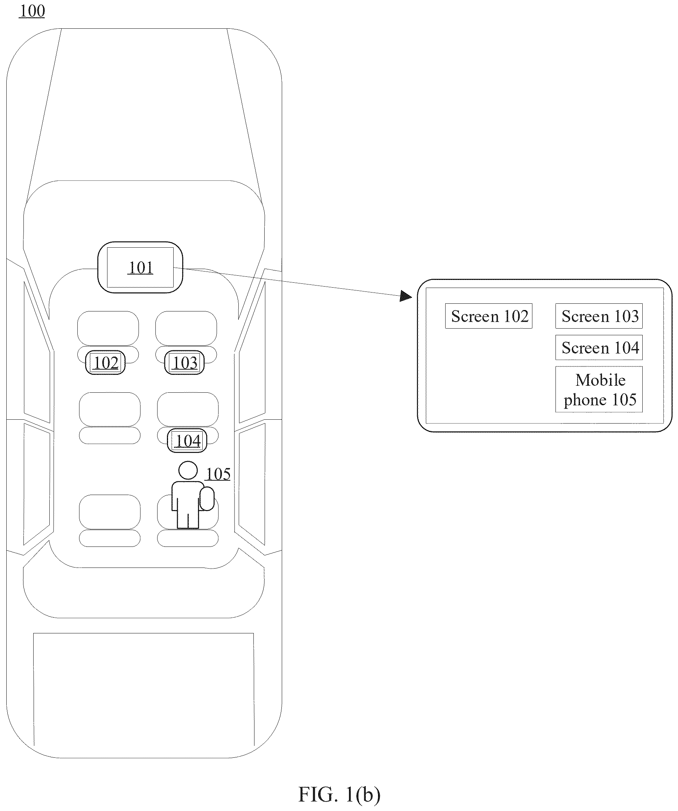

As shown in FIG. 1(a), a vehicle head unit 101, a display screen 102, a display screen 103, and a display screen 104 are disposed in a cabin of a vehicle 100. It can be learned that, if the display screen 102, the display screen 103, and the display screen 104 are respectively disposed and fastened to a driver's seat, a front passenger seat, and a right passenger seat in a second row, the vehicle head unit 101 may display positions of the display screen 102, the display screen 103, and the display screen 104 on a screen. For example, a user (the driver or a passenger) may also control the display screen 102, the display screen 103, and the display screen 104 through the vehicle head unit 101, for example, display an application interface of the vehicle head unit 101 on the display screen 102 in a multi-pane display manner. As shown in FIG. 1(b), a passenger carrying a mobile terminal 105 (for example, a mobile phone) enters the cabin from the right side, and sits in a right passenger seat in a third row. In this case, if the vehicle head unit 101 determines that the mobile terminal 105 is at a position in the cabin of the vehicle 100, that is, the mobile terminal 105 is located behind the display screen 104, the vehicle head unit 101 may control the mobile terminal 105 to interact with the display screen 104. For example, the passenger watches a video by using the mobile terminal 105, and the vehicle head unit 101 may control the mobile terminal 105 to project and display the video on the display screen 104.

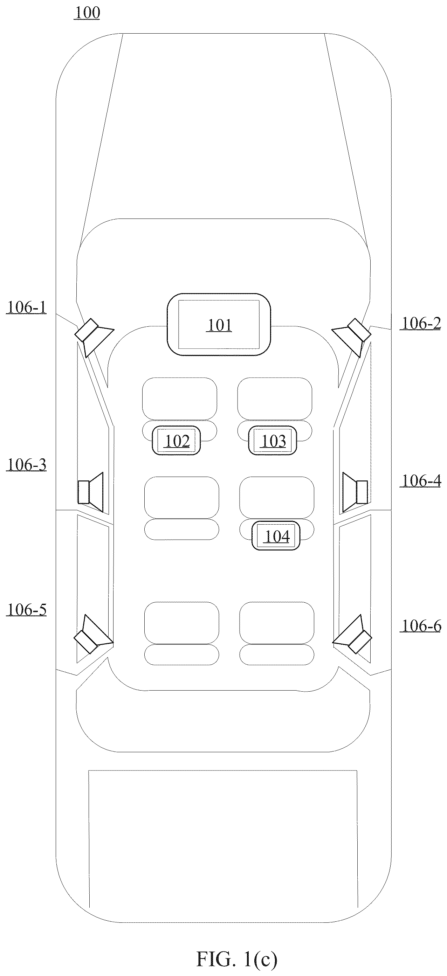

Refer to FIG. 1(c) again. A plurality of speakers may be further disposed in the cabin of the vehicle 100. The cabin of the vehicle 100 shown in FIG. 1(c) is used as an example. Six speakers may be disposed in the cabin of the vehicle 100, that is, speakers 106-1 to 106-6 are respectively located on two sides of the cabin. The vehicle head unit 101 may further control the mobile terminal 105 to interact with a speaker, for example, to play the sound of the video that is watched by the passenger by using the mobile terminal 105.

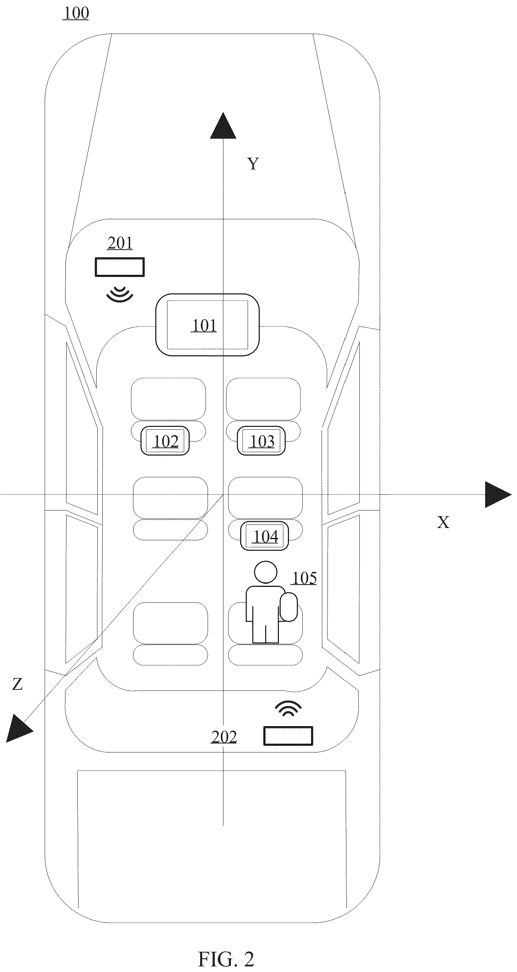

In some embodiments, a manner in which the vehicle head unit 101 determines the location of the mobile terminal 105 in the cabin of the vehicle 100 may include Wi-Fi positioning, Bluetooth positioning, and ultra-wideband positioning. As shown in FIG. 2, Wi-Fi positioning is used as an example. At least two Wi-Fi signal devices, a Wi-Fi node 201 (access point, AP) and a Wi-Fi node 202, need to be deployed in the cabin of the vehicle 100. Wi-Fi signals are separately transmitted between the mobile terminal 105 and the Wi-Fi node 201 and between the mobile terminal 105 and the Wi-Fi node 202, to determine distances or angles between the mobile terminal 105 and the Wi-Fi node 201 and between the mobile terminal 105 and the Wi-Fi node 202. Then the location of the mobile terminal 105 is determined by using a triangle positioning method. To be specific, the location of the mobile terminal 105 in a three-dimensional coordinate system (an xyz coordinate system) that is formed by the cabin of the vehicle 100 is determined based on locations of the Wi-Fi node 201 and the Wi-Fi node 202 in the three-dimensional coordinate system and the distances or angles between the mobile terminal 105 and the Wi-Fi node 201 and between the mobile terminal 105 and the Wi-Fi node 202.

Similarly, for Bluetooth positioning and ultra-wideband positioning, at least two Bluetooth signal devices also need to be disposed in the cabin of the vehicle 100, to locate the mobile terminal 105. Because precision of Bluetooth positioning and Wi-Fi positioning is usually from a few meters to hundreds of meters, and space of the cabin of the vehicle 100 is usually a few square meters, for a cabin with relatively small space, using Wi-Fi positioning and Bluetooth positioning can only determine that the mobile terminal 105 is in the cabin but cannot accurately determine the specific location of the mobile terminal in the cabin.

To resolve a problem of high costs and low precision in locating a mobile terminal in a cabin of a vehicle, an embodiment of this application provides a positioning method. In the positioning method, speakers disposed in the cabin of the vehicle are controlled to play ultrasonic detection signals. For an ultrasonic detection signal that is received by the mobile terminal after a user carrying the mobile terminal enters the cabin of the vehicle, a specific speaker corresponding to the received ultrasonic detection signal is determined based on a signal characteristic of the received ultrasonic detection signal. If it is determined that the ultrasonic detection signals are from a plurality of speakers, a target speaker, which is a speaker closest to the mobile terminal, is determined based on a time difference (a time sequence) in the ultrasonic detection signal received by the mobile terminal. Then a location of the mobile terminal in the cabin is determined based on a layout of the speakers in the cabin.

Specifically, for example, after detecting that the mobile terminal accesses a network of the vehicle, the vehicle head unit controls the plurality of speakers in the cabin to simultaneously play the ultrasonic detection signals and notifies the mobile terminal, for the mobile terminal to receive and store the ultrasonic detection signals. The ultrasonic detection signal played by each speaker has a unique signal characteristic. Therefore, the mobile terminal may identify, based on the signal characteristics corresponding to the stored ultrasonic detection signals, a speaker that has played the ultrasonic detection signal. Then the speaker closest to the mobile terminal may be obtained through computing based on a time difference between the ultrasonic detection signal played by the identified speaker that has played the ultrasonic detection signal and the ultrasonic detection signal received by the mobile terminal, to further determine the location of the mobile terminal in the cabin.

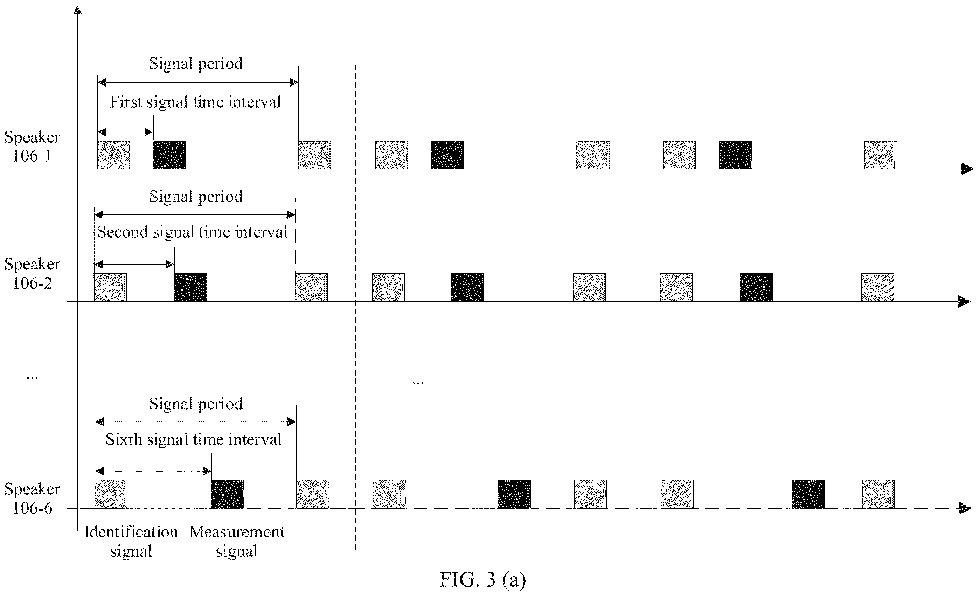

In some embodiments, the speaker may be an in-vehicle device capable of generating the ultrasonic detection signal. The ultrasonic detection signal herein may include an identification signal and a measurement signal to be played by the speaker, and frequencies of the identification signal and the measurement signal may be the same or different. As shown in FIG. 1(c) and FIG. 3(a), the vehicle head unit 101 may be configured to detect whether a mobile terminal has entered the cabin of the vehicle 100, for example, determine whether the mobile terminal 105 has accessed a local area network of the cabin of the vehicle 100. After determining that the mobile terminal 105 has entered the cabin of the vehicle 100, the vehicle head unit 101 may send a positioning instruction to the mobile terminal 105 through the local area network, and control the speakers 106-1 to 106-6 to play the ultrasonic detection signals. The positioning instruction herein is used to instruct the mobile terminal 105 to start to receive and store the ultrasonic detection signals. The speaker 106-1 is used as an example. In one signal period of the ultrasonic detection signal, the speaker 106-1 successively plays one identification signal (which may also be referred to as a start signal), one measurement signal, and one identification signal (which may also be referred to as an end signal). A time interval between the two identification signals played by the speaker 106-1 represents duration of the signal period. In one signal period, a signal time interval between the 1^{st} identification signal and the measurement signal represents a signal characteristic corresponding to the ultrasonic detection signal played by the speaker 106-1. In other words, in one signal period, there is a signal time interval between the 1^{st} identification signal and the measurement signal played by each speaker, and the signal time interval corresponding to each speaker varies.

Refer to FIG. 1(c) and FIG. 3(a) again. The speakers 106-1 to 106-6 may have a first signal time interval to a sixth signal time interval respectively. In a process in which the plurality of speakers play the ultrasonic detection signals simultaneously and periodically, in each signal period, after simultaneously playing the 1^{st} identification signal, the plurality of speakers separately play the measurement signal at respective different signal time intervals in turn, and simultaneously play the 2^{nd} identification signal, to complete one signal period.

In some embodiments, the vehicle head unit 101 may further send the signal time intervals set for the speakers 106-1 to 106-6 in the cabin of the vehicle 100 to the mobile terminal 105. The mobile terminal 105 may temporarily store the signal time intervals set for the speakers 106-1 to 106-6, and determine, based on the signal time intervals, a speaker that has played the ultrasonic detection signal from the received and stored ultrasonic detection signals, that is, determine a speaker from which the at least one received ultrasonic detection signal comes.

In some other embodiments, after the mobile terminal 105 continuously stores the ultrasonic detection signals in a period of time, the mobile terminal 105 may return an audio file of the stored ultrasonic detection signals to the vehicle head unit 101. The vehicle head unit 101 may parse the ultrasonic detection signals in the audio file based on the signal time intervals set for the speakers 106-1 to 106-6 in the cabin of the vehicle 100, to determine the speakers corresponding to the ultrasonic detection signals received by the mobile terminal 105.

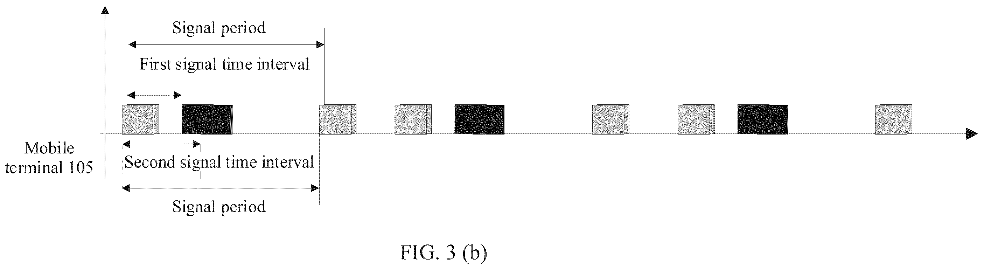

Refer to FIG. 3(b) again. The mobile terminal 105 has received ultrasonic detection signals. On a basis of the signal time interval between the 1^{st} identification signal and the measurement signal in the ultrasonic detection signal received in each signal period, for example, the signal time intervals between the identification signals and the measurement signals in the ultrasonic detection signals received by the mobile terminal 105 include the first signal time interval and the second signal time interval, it can be determined that the mobile terminal 105 has received an ultrasonic detection signal from the speaker 106-1 and an ultrasonic detection signal from the speaker 106-2. Further, based on a sequence of time points at which the ultrasonic detection signals are received by the mobile terminal 105, namely, points of time when the identification signals in the ultrasonic detection signals played by different speakers are received, it may be determined that a point of time of the ultrasonic detection signal from the speaker 106-2 is earlier than that of the speaker 106-1. For example, it is determined that the identification signal in the ultrasonic detection signal that the mobile terminal 105 has received from the speaker 106-2 is earlier than the identification signal in the ultrasonic detection signal from the speaker 106-1. In this way, it is learned that the mobile terminal 105 is closer to the speaker 106-2 relative to the speaker 106-1. It is determined, based on the location of the speaker 106-2 in the cabin of the vehicle 100, which is close to the front passenger seat, that the mobile terminal 105 is located in the front passenger seat.

In some embodiments, the ultrasonic detection signal herein is a sound wave whose frequency range is from 17 kHz to 24 kHz, and this ultrasonic wave has a frequency beyond a frequency range (20 Hz to 15 kHz) perceptible by a normal human ear. In a process of determining the location of the mobile terminal in the cabin by using the positioning method in this embodiment of this application, no noise that affects user experience is generated.

It can be learned that, according to the positioning method in this embodiment of this application, existing speakers in the cabin of the vehicle can be employed, and no additional signal device needs to be added, thereby reducing costs. Each speaker is controlled to play the ultrasonic detection signal in the signal period, and the signal time intervals between the identification signals and the measurement signals in the ultrasonic detection signals are compared for differences, so that the mobile terminal can receive and distinguish between the ultrasonic detection signals played by different speakers. A relative location relationship between the mobile terminal and the speaker is determined based on a sequence of time points at which the ultrasonic detection signals are received by the mobile terminal, and is combined with a layout of the speakers in the cabin of the vehicle to determine the precise location of the mobile terminal.

Refer to FIG. 1(c) and FIG. 3(a) again. Six speakers, which are the speakers 106-1 to 106-6, are disposed in the cabin of the vehicle 100. The signal period in which the speaker plays the ultrasonic detection signal and the signal time interval corresponding to the ultrasonic detection signal, which is the signal time interval between the identification signal and the measurement signal in the ultrasonic detection signal, may be determined based on a size of the space of the cabin of the vehicle 100. For example, the space of the cabin of the vehicle 100 is a region whose size is 3 m * 2 m (3 meters * 2 meters). A maximum distance between the speaker 106-1 and the speaker 106-6 is 3.6 m, and a propagation speed of sound is 340 m/s (meters/second). In other words, it needs to take 3.6 m/340 m/s ≈ 10 ms (milliseconds), which is the longest time for transmitting the ultrasonic detection signal in the cabin, to transmit sound from the speaker 106-1 to the speaker 106-6. For example, the signal period may be set to 500 ms, the signal time interval corresponding to the speaker 106-1 may be 50 ms, and the signal time interval corresponding to the speaker 106-2 may be 100 ms. For example, for the speakers 106-1 to 106-6, after the 1^{st} identification signal is played, the 2^{nd} identification signal is played 500 ms later. For the speaker 106-1, after the 1^{st} identification signal is played, the measurement signal is played 50 ms later, and then the 2^{nd} identification signal is played 450 ms yet later, to complete playing of the ultrasonic detection signal in one signal period. For the speaker 106-2, after the 1^{st} identification signal is played, the measurement signal is played 100 ms later, and then the 2^{nd} identification signal is played 400 ms yet later, to complete playing of the ultrasonic detection signal in one signal period. By analogy,, the signal time interval of the speaker 106-6 may be 300 ms. It can be learned that, the duration of the signal time interval may be far greater than the longest time for transmitting the ultrasonic detection signal in the cabin, thereby avoiding a mistake in distinguishing between different speakers by the mobile terminal due to overlapping or an excessively short time interval between identification signals or between measurement signals in a plurality of ultrasonic detection signals received by the mobile terminal.

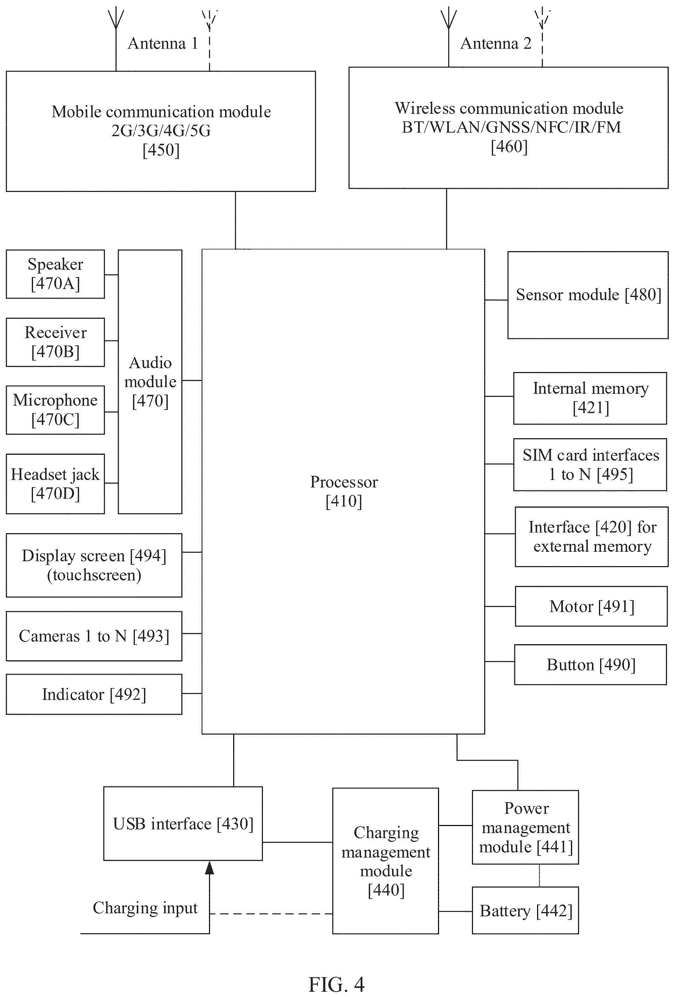

FIG. 4 is a diagram of a structure of an electronic device according to an embodiment of this application. As shown in FIG. 4, the electronic device (for example, a mobile phone or a vehicle head unit) may include: a processor 410, an interface 420 for external memory, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display screen 494, a subscriber identity module (subscriber identity module, SIM) card interface 495, and the like.

The sensor module 480 may include: a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and the like.

It may be understood that the structure shown in this embodiment does not constitute a specific limitation on the electronic device. In some other embodiments, the electronic device may include more or fewer components than those shown in the figure, or some components may be combined, or some components may be split, or different component arrangements may be used. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be disposed in the processor 410, and is configured to store instructions and data. In some embodiments, the memory in the processor 410 is a cache memory. The memory may store an instruction or data that has just been used or is to be cyclically used by the processor 410. If the processor 410 needs to use the instruction or data again, the processor 410 may invoke the instruction or data directly from the memory. Therefore, repeated access is avoided, waiting time of the processor 410 is reduced, and system efficiency is improved.

In some embodiments, the processor 410 may include one or more interfaces. The interface may include an inter-integrated circuit (inter-integrated circuit, 12C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface or the like.

It may be understood that an interface connection relationship between the modules shown in this embodiment is merely used as an example for description, and does not constitute a limitation on the structure of the electronic device. In some other embodiments, the electronic device may alternatively use an interface connection manner different from that in the foregoing embodiment, or may use a combination of a plurality of interface connection manners.

The electronic device implements a display function by using the GPU, the display screen 494, the application processor, and the like. The GPU is a microprocessor for image processing, and is connected to the display screen 494 and the application processor. The GPU is configured to perform mathematical and geometric computing, and render an image. The processor 410 may include one or more GPUs that execute program instructions to generate or change display information.

The display screen 494 is configured to display an image, a video, and the like. The display screen 494 includes a display panel.

The electronic device may implement a photographing function by using the ISP, the camera 493, the video codec, the GPU, the display screen 494, the application processor, and the like. The ISP is configured to process data fed back by the camera 493. The camera 493 is configured to capture a static image or a video. In some embodiments, the electronic device may include one or N cameras 493, and N is a positive integer greater than 1.

The interface 420 for external memory may be configured to connect an external storage card, for example, a micro SD card, to expand a storage capability of the electronic device. The external storage card communicates with the processor 410 through the interface 420 for external memory, to implement a data storage function. For example, files such as music and videos are stored in the external storage card.

The internal memory 421 may be configured to store computer-executable program code, and the computer-executable program code includes instructions. The processor 410 executes various function applications and data processing of the electronic device by running the instructions stored in the internal memory 421. For example, in this embodiment of this application, the processor 410 may execute the instructions stored in the internal memory 421. The internal memory 421 may include a program storage area and a data storage area.

The program storage area may store an operating system, an application program (for example, a sound playing function or an image playing function) needed by at least one function, and the like. The data storage area may store data (for example, audio data or a phone book) and the like that are created in a process of using the electronic device. In addition, the internal memory 421 may include a high-speed random access memory, and may further include a non-volatile memory, for example, at least one magnetic disk storage device, a flash memory, or a universal flash storage (universal flash storage, UFS).

It may be understood that the structure shown in this embodiment of this application does not constitute a specific limitation on the electronic device. In some other embodiments of this application, the electronic device (for example, a mobile phone or a vehicle head unit) may include more or fewer components than those shown in the figure, or some components may be combined, or some components may be split, or different component arrangements may be used. The components shown in the figure may be implemented by hardware, software, or a combination of software and hardware.

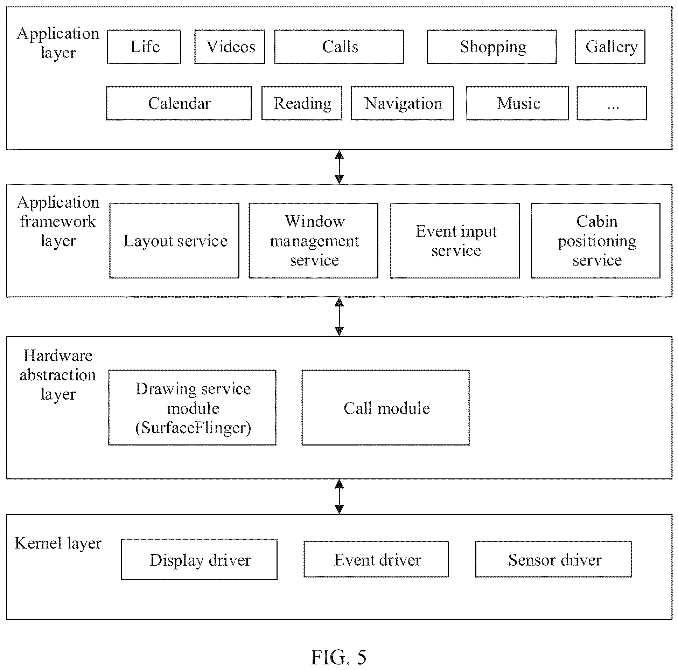

FIG. 5 is a block diagram of a software structure of an electronic device according to an embodiment of the present invention.

In a layered architecture, software is divided into a plurality of layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

As shown in FIG. 5, the application layer may include applications such as Life, Videos, Books, Shopping, Gallery, Calendar, Calls, Navigation, and Music. It may be understood that the application herein may be an application or service already installed in the electronic device 100, or an application or service not installed in the electronic device 100 but retrieved by using a fast service center.

The application framework layer may include a layout service, a window management service, an event input service, a cabin positioning service, and the like. Herein, a layout subsystem is used to determine a location of each display element on a screen of the electronic device. The event input service is used to respond to an operation performed by a user on the electronic device, and change content displayed on the screen of the electronic device. The window management service is used to obtain properties of a window corresponding to an application. When the electronic device shown in FIG. 5 is the vehicle head unit, the cabin positioning service is used to detect whether a mobile terminal has entered the cabin of the vehicle, send the positioning instruction to the mobile terminal, control the speakers disposed in the cabin to play the ultrasonic detection signals, and determine a location of the mobile terminal in the cabin based on an ultrasonic detection signal returned by the mobile terminal. In some embodiments, when the electronic device shown in FIG. 5 is a mobile terminal, the cabin positioning service is configured to receive and store ultrasonic detection signals in response to the positioning instruction; determine, based on the signal characteristics that are sent by the vehicle head unit and that are of the ultrasonic detection signals to be played by the speakers disposed in the cabin, a speaker corresponding to an ultrasonic detection signal from the received and stored ultrasonic detection signals; and determine a location of the mobile terminal in the cabin based on a location of the speaker.

The hardware abstraction layer may include a drawing service module (SurfaceFlinger), a call module, and the like. The drawing service module (SurfaceFlinger) is used to draw and synthesize one or more chart layers in a window of one or more applications, to obtain frame data. The call module may be used for transfer of a received incoming call message to a call processing module, processing and transfer of a received hang-up message, and the like.

The kernel layer includes a display driver, an event driver, a sensor driver, and the like.

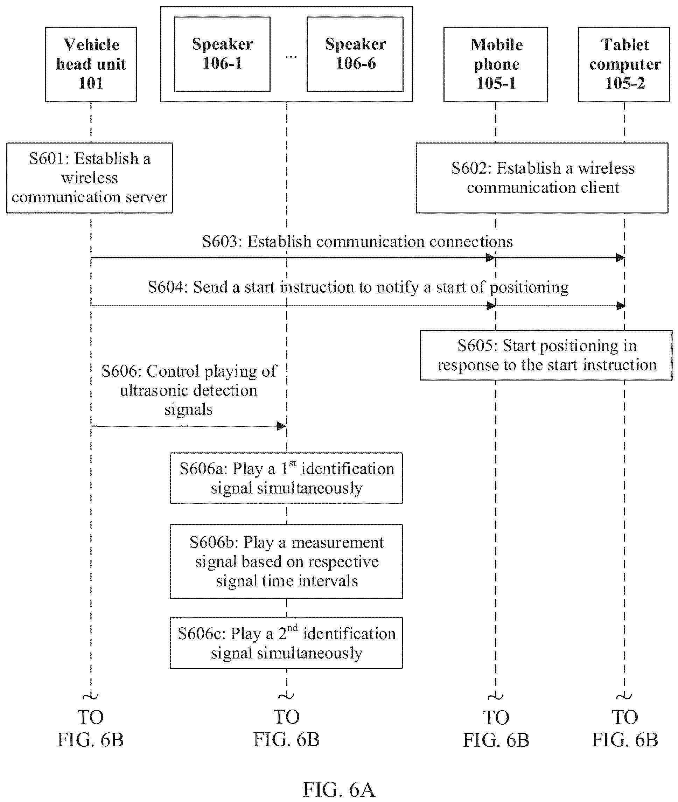

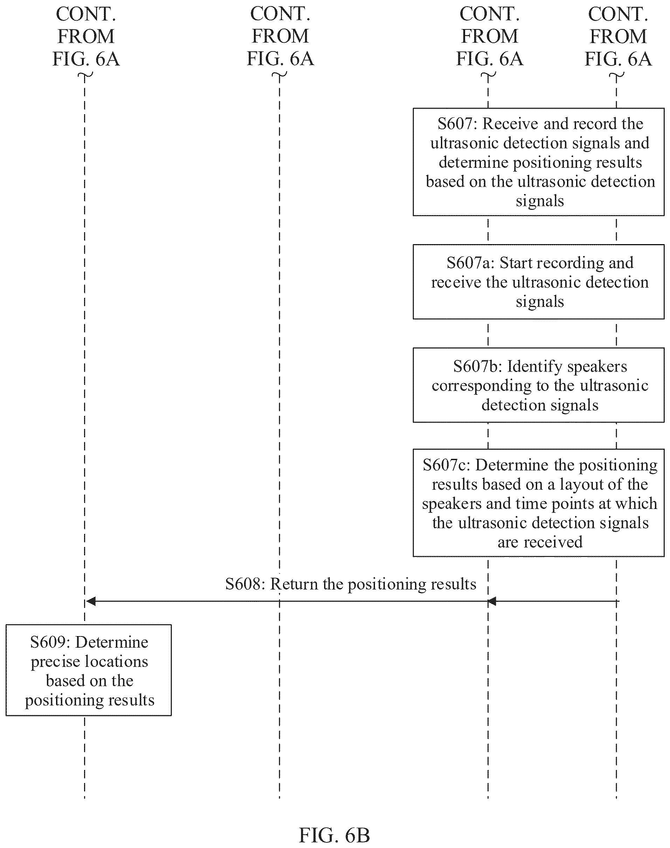

The following describes in detail, based on a schematic method flowchart shown in FIG. 6A and FIG. 6B, a positioning method provided in an embodiment of this application. The method shown in FIG. 6A and FIG. 6B may be implemented by a processor of an in-vehicle device or a mobile terminal by executing related instructions.

As shown in FIG. 6A and FIG. 6B, the positioning method may include the following steps.

S601: A vehicle head unit 101 establishes a wireless communication server.

For example, the vehicle head unit 101 of a vehicle 100 may serve as a master device, to form a local area network (for example, a local area network in a network segment 192.168.1.a/255.255.255.0 established by using a Wi-Fi technology) through a wireless network. The local area network herein may cover a region corresponding to a cabin of the vehicle 100. The vehicle head unit 101 establishes a TCP (transmission control protocol, transmission control protocol) server based on the wireless network.

S602: A mobile phone 105-1 and a tablet computer 105-2 separately establish a wireless communication client.

For example, the mobile phone 105-1 and the tablet computer 105-2 may serve as secondary devices to establish TCP clients, and the TCP client may be configured to connect to the TCP server established by the master device for communication.

S603: The mobile phone 105-1 and the tablet computer 105-2 separately establish a communication connection to the vehicle head unit 101.

For example, after a passenger carrying the mobile phone 105-1 and a passenger carrying the tablet computer 105-2 enter the cabin of the vehicle 100, the mobile phone 105-1 and the tablet computer 105-2 detect the local area network corresponding to the vehicle head unit 101. The mobile phone 105-1 and the tablet computer 105-2 may separately establish the communication connection to the TCP server of the vehicle head unit 101 through the TCP client.

In some embodiments, after the mobile phone 105-1 and the tablet computer 105-2 establish the communication connection to the TCP server of the vehicle head unit 101, local area network addresses of the mobile phone 105-1 and the tablet computer 105-2 may be 192.168.1.b and 192.168.1.c respectively.

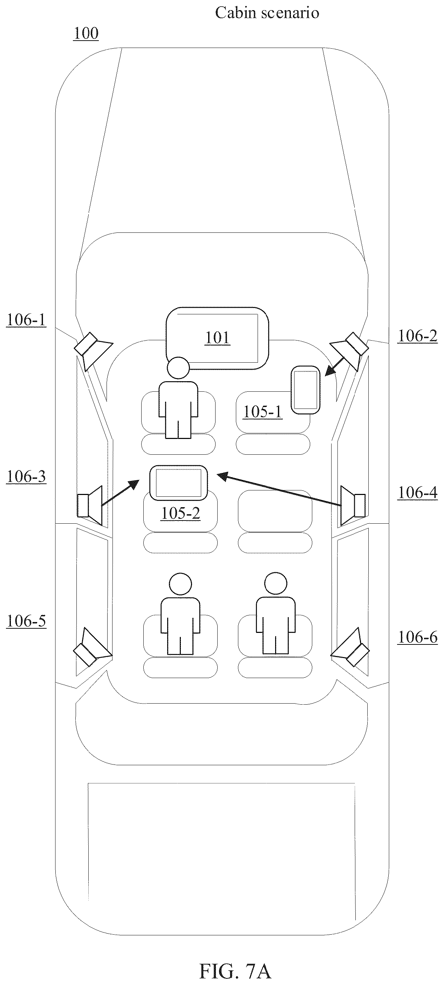

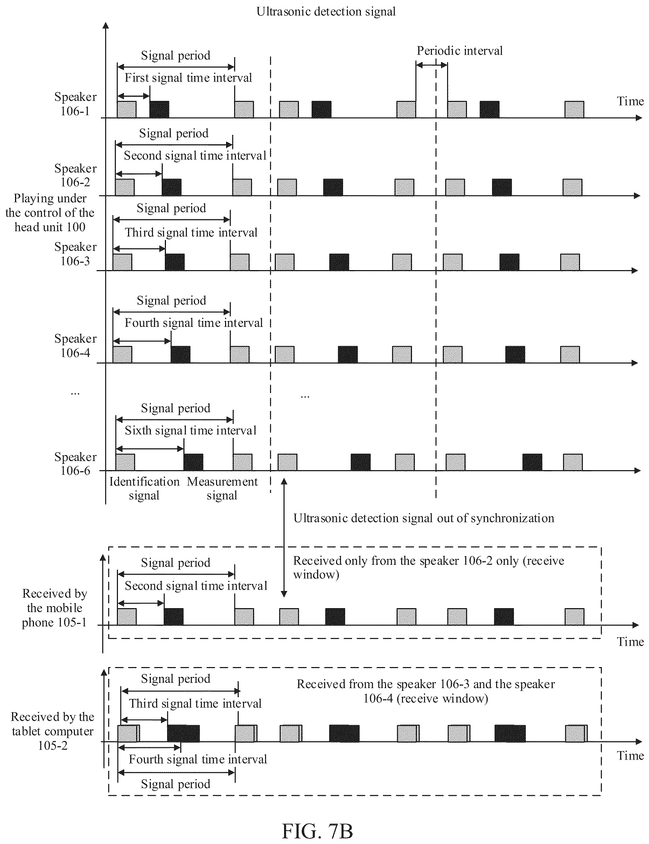

In some embodiments, as shown in FIG. 7A and FIG. 7B, a passenger A carrying the mobile phone 105-1 sits in a front passenger seat in the cabin, and a passenger B carrying the tablet computer 105-2 sits on the left side in a second row. In this case, the vehicle head unit 101 only determines that communication connections to the mobile phone 105-1 and the tablet computer 105-2 have been established, but does not yet determine specific locations of the mobile phone 105-1 and the tablet computer 105-2 in the cabin.

S604: The vehicle head unit 101 sends a start instruction to the mobile phone 105-1 and the tablet computer 105-2, to notify the mobile phone 105-1 and the tablet computer 105-2 of a start of positioning.

For example, after determining that the communication connections to the mobile phone 105-1 and the tablet computer 105-2 have been established, the vehicle head unit 101 sends the start instruction to the mobile phone 105-1 and the tablet computer 105-2 through the local area network, to notify the mobile phone 105-1 and the tablet computer 105-2 of the start of positioning. It may be understood that, that the vehicle head unit 101 sends the start instruction to the mobile phone 105-1 and the tablet computer 105-2 means that the vehicle head unit 101 notifies the mobile phone 105-1 and the tablet computer 105-2 of the start of positioning.

In some embodiments, the start instruction sent by the vehicle head unit 101 may further carry signal time intervals set by the vehicle head unit 101 for speakers 106-1 to 106-6 in the cabin of the vehicle 100. The mobile phone 105-1 and the tablet computer 105-2 may temporarily store the signal time intervals set for the speakers 106-1 to 106-6, and determine a speaker from which at least one received ultrasonic detection signal comes.

In some other embodiments, a region corresponding to the local area network that is formed by using the vehicle head unit 101 through the wireless network may alternatively be greater than the region corresponding to the cabin of the vehicle 100. In this case, a trigger condition for sending, by the vehicle head unit 101, the start instruction to the mobile phone 105-1 and the tablet computer 105-2 may further include: The vehicle head unit 101 detects that the mobile phone 105-1 and the tablet computer 105-2 have established communication connections to the vehicle head unit 101, and the vehicle head unit 101 detects that a door of the cabin of the vehicle 100 is opened.

S605: The mobile phone 105-1 and the tablet computer 105-2 start positioning in response to the start instruction.

For example, the start of the positioning herein may include: The mobile phone 105-1 and the tablet computer 105-2 set microphones to entering an idle state, so that the mobile phone 105-1 and the tablet computer 105-2 may control the microphones to record ultrasonic detection signals to be played by the speakers 106-1 to 106-6 disposed in the cabin of the vehicle 100. This means that the mobile phone 105-1 and the tablet computer 105-2 can start recording. In some embodiments, if the mobile phone 105-1 or the tablet computer 105-2 determines that the microphone is still in an in-use state after the start instruction is received, for example, the passenger is performing a voice call through the mobile phone 105-1, the mobile phone 105-1 or the tablet computer 105-2 may give a prompt to the user, indicating that positioning is about to be started and use of the microphone is to be suspended.

S606: The vehicle head unit 101 controls the speakers 106-1 to 106-6 to play ultrasonic detection signals.

For example, after sending the start instruction, the vehicle head unit 101 may control, within a preset period of time, the speakers 106-1 to 106-6 to repeatedly play the ultrasonic detection signals. The ultrasonic detection signal played each time may be based on one signal period. In other words, the ultrasonic detection signal may be repeatedly played based on a plurality of signal periods. In some embodiments, when the mobile phone 105-1 and the tablet computer 105-2 return positioning results to the vehicle head unit 101, or the vehicle head unit 101 has determined the positioning results based on stored ultrasonic detection signals that are returned by the mobile phone 105-1 and the tablet computer 105-2, the vehicle head unit 101 may control the speakers 106-1 to 106-6 to stop playing the ultrasonic detection signals.

Based on one signal period, a process in which the vehicle head unit performs step S606 may include the following steps.

S606a: The vehicle head unit 101 controls the speakers 106-1 to 106-6 to simultaneously play a 1^{st} identification signal.

For example, a signal period of 500 ms is used as an example. As shown in FIG. 7A and FIG. 7B, the vehicle head unit 101 may control the speakers 106-1 to 106-6 to simultaneously play the 1^{st} identification signal at a start point of time of one signal period.

S606b: The vehicle head unit 101 controls the speakers 106-1 to 106-6 to play, based on respective signal time intervals, a measurement signal.

For example, based on the signal period of 500 ms, the vehicle head unit 101 may set a first signal time interval to a sixth signal time interval for the speakers 106-1 to 106-6 respectively. For example, the first signal time interval corresponding to the speaker 106-1 may be 50 ms, the second signal time interval corresponding to the speaker 106-2 may be 100 ms, and by analogy, the sixth signal time interval corresponding to the speaker 106-6 may be 300 ms. Refer to FIG. 7A and FIG. 7B again. The ultrasonic detection signals played by the speakers 106-1 and 106-2 are used as an example. Based on one signal period, a time interval between playing the 1^{st} identification signal by the speaker 106-1 and playing the measurement signal by the speaker 106-1 may be 50 ms. Based on one signal period, a time interval between playing the 1^{st} identification signal by the speaker 106-2 and playing the measurement signal by the speaker 106-2 may be 100 ms.

S606c: The vehicle head unit 101 controls the speakers 106-1 to 106-6 to simultaneously play a 2^{nd} identification signal.

For example, the vehicle head unit 101 may control the speakers 106-1 to 106-6 to simultaneously play the 2^{nd} identification signal at an end point of time of one signal period. It may be understood that a periodic interval may be further set between adjacent signal periods. For example, the periodic interval may be set to 70 ms.

In some embodiments, for the ultrasonic detection signal in one signal period, frequencies of the identification signal and the measurement signal in the ultrasonic detection signal may be different, to more clearly distinguish between the identification signal and the measurement signal. For example, a frequency of the identification signal may be 18 kHz, and a frequency of the measurement signal may be 20 kHz.

S607: The mobile phone 105-1 and the tablet computer 105-2 receive and record the ultrasonic detection signals, and determine the positioning results based on the ultrasonic detection signals.

For example, the mobile phone 105-1 and the tablet computer 105-2 may start recording in response to the start instruction received from the vehicle head unit 101, to record the received ultrasonic detection signals; determine, based on the signal time interval between the identification signal and the measurement signal in each received ultrasonic detection signal, speakers that have played the ultrasonic detection signals; and further determine relative position relationships with the speakers, namely, the positioning results, based on a time point of the measurement signal in each received ultrasonic detection signal. The vehicle head unit 101 may determine the precise locations of the mobile phone 105-1 and the tablet computer 105-2 with reference to a layout of the speakers in the cabin, for example, the front passenger seat and a passenger seat on the left in the second row.

A process in which the mobile phone 105-1 and the tablet computer 105-2 perform step S607 may include the following steps.

S607a: The mobile phone 105-1 and the tablet computer 105-2 start recording, and receive the ultrasonic detection signals.

For example, the mobile phone 105-1 and the tablet computer 105-2 may receive the ultrasonic detection signals through the microphones by starting a recording function, and record the ultrasonic detection signals into an audio file.

In some embodiments, as shown in FIG. 7A and FIG. 7B, the mobile phone 105-1 and the tablet computer 105-2 may receive the ultrasonic detection signals based on a preset recording period; record the ultrasonic detection signals into the audio file; and after the audio file corresponding to the ultrasonic detection signals in the preset recording period is full, start to analyze the ultrasonic detection signals in the audio file.

S607b: The mobile phone 105-1 and the tablet computer 105-2 identify speakers corresponding to the ultrasonic detection signals.

For example, in the cabin of the vehicle 100, because a seat, a passenger, and another object are to block transmission of the ultrasonic detection signals, the mobile phone 105-1 and the tablet computer 105-2 may not receive the ultrasonic detection signal played by every speaker. As shown in FIG. 7A and FIG. 7B, the mobile phone 105-1 and the tablet computer 105-2 may identify, based on the received ultrasonic detection signals, the speakers corresponding to the ultrasonic detection signals. The mobile phone 105-1 is used as an example. As shown in FIG. 7A and FIG. 7B again, the mobile phone 105-1 may determine the signal time interval between the 1^{st} identification signal and the measurement signal in the received ultrasonic detection signal in one signal period. For example, the signal time interval is 100 ms, and it is determined, based on the signal time intervals set by the vehicle head unit 101 for the speakers 106-1 to 106-6 to play the ultrasonic detection signals, that the received ultrasonic detection signal is from the speaker 106-2. Similarly, for the tablet computer 105-2, as shown in FIG. 7A and FIG. 7B again, the tablet computer 105-2 may determine that ultrasonic detection signals from the speaker 106-3 and the speaker 106-4 have been received. In other words, in the ultrasonic detection signals received by the tablet computer 105-2, the signal time interval between the 1^{st} identification signal and the measurement signal is 150 ms and 200 ms respectively.

In some embodiments, if the frequencies of the identification signal and the measurement signal in the ultrasonic detection signal are different, for example, the frequency of the identification signal may be 18 kHz and the frequency of the measurement signal may be 20 kHz, the identification signal and the measurement signal in the ultrasonic detection signal in the signal period may alternatively be determined based on signal strength corresponding to the frequency of the identification signal and signal strength corresponding to the frequency of the measurement signal. For example, signal strength of the identification signal whose frequency is 18 kHz may be 2.5 dB (decibels), and signal strength of the measurement signal whose frequency is 20 kHz may be 2.8 dB.

S607c: The mobile phone 105-1 and the tablet computer 105-2 determine the positioning results based on the layout of the speakers and time points at which the ultrasonic detection signals are received.

For example, as shown in FIG. 7A and FIG. 7B again, the mobile phone 105-1 is used as an example. Because the mobile phone 105-1 has received only the ultrasonic detection signal played by the speaker 106-2, it may be determined that a relative position relationship of the mobile phone 105-1 is that the mobile phone 105-1 is close to the speaker 106-2. For the tablet computer 105-2, it is determined that ultrasonic detection signals from the speaker 106-3 and the speaker 106-4 have been received, and further it may be determined, based on time points of the identification signals in the received ultrasonic detection signals, that a relative position relationship of the tablet computer 105-2 is that the tablet computer 105-2 is close to the speaker 106-3.

In some embodiments, as shown in FIG. 7A and FIG. 7B again, the tablet computer 105-2 receives ultrasonic detection signals from the speaker 106-3 and the speaker 106-4. Because a distance between the speaker 106-3 and the tablet computer 105-2 is different from a distance between the speaker 106-4 and the tablet computer 105-2, in the ultrasonic detection signals received by the tablet computer 105-2 that correspond to the speaker 106-3 and the speaker 106-4, time points of the identification signals are different. For example, it is assumed that the distance between the speaker 106-3 and the tablet computer 105-2 and the distance between the speaker 106-4 and the tablet computer 105-2 are 0.6 m and 0.2 m respectively. Then a time difference may be (0.6 m - 0.2 m) /340 m/s ≈ 1 ms. The signal time intervals corresponding to the ultrasonic detection signals from the speaker 106-3 and the speaker 106-4 are respectively 150 ms and 200 ms. Therefore, a time difference between the identification signals in different ultrasonic detection signals does not affect the signal time interval between the identification signal and the measurement signal in the ultrasonic detection signal, and no misjudgment is caused in the positioning results.

S608: The mobile phone 105-1 and the tablet computer 105-2 return the positioning results to the vehicle head unit 101.

For example, the mobile phone 105-1 and the tablet computer 105-2 may return the positioning results to the vehicle head unit 101 through the communication connections.

S609: The vehicle head unit 101 determines the precise locations of the mobile phone 105-1 and the tablet computer 105-2 based on the positioning results from the mobile phone 105-1 and the tablet computer 105-2.

For example, the vehicle head unit 101 may determine, based on the layout of each speaker in the cabin of the vehicle 100 and the positioning results from the mobile phone 105-1 and the tablet computer 105-2, for example, based on the location of the speaker 106-2 which is the front passenger seat and the location of the speaker 106-3 which is the left passenger seat in the second row, that the mobile phone 105-1 is located in the front passenger seat and the tablet computer 105-2 is located in the left passenger seat in the second row.

It may be understood that, in some embodiments, after the mobile phone 105-1 and the tablet computer 105-2 start the recording function, receive the ultrasonic detection signals through the microphones, and record the ultrasonic detection signals into the audio file, the mobile phone 105-1 and the tablet computer 105-2 may directly return the audio file to the vehicle head unit 101. The vehicle head unit 101 may parse the ultrasonic detection signals in the audio file to determine the positioning results of the mobile phone 105-1 and the tablet computer 105-2.

In some embodiments, if it is determined that the ultrasonic detection signals received by the mobile terminal are from at least three speakers in the cabin of the vehicle, the precise location of the mobile terminal in the cabin of the vehicle may alternatively be determined by using a time difference of arrival (time difference of arrival, TDOA) positioning algorithm. The time difference of arrival positioning algorithm may be used to compute differences in distances between the mobile terminal and the speakers based on differences of time at which the ultrasonic detection signals sent by the at least three speakers arrive at the mobile terminal, and determine coordinates of the mobile terminal in the cabin of the vehicle by combining coordinates of the speakers in the cabin of the vehicle with the distance differences.

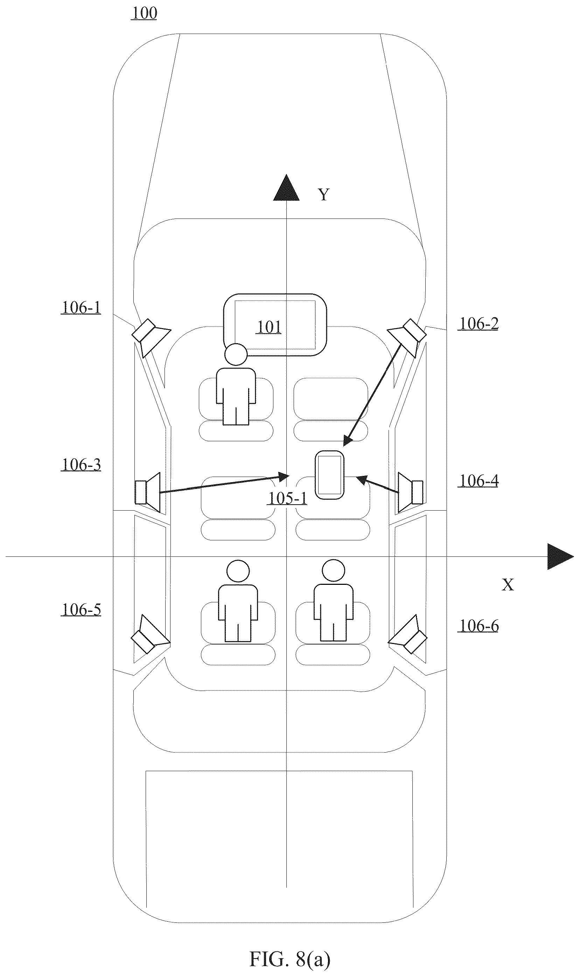

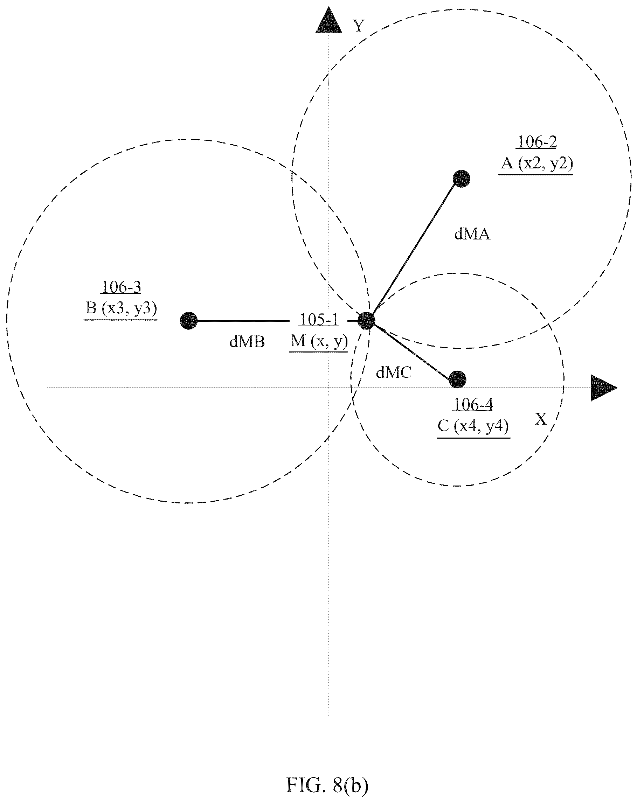

FIG. 8(a) and FIG. 8(b) are diagrams of determining the location of the mobile phone 105-1 in the cabin of the vehicle 100 by using the time difference of arrival positioning algorithm.

As shown in FIG. 8(a), six speakers 106-1 to 106-6 are disposed in the cabin of the vehicle 100. In a two-dimensional coordinate system (an xy coordinate system) formed by the cabin of the vehicle 100, respective locations of the speakers 106-1 to 106-6 may be determined through coordinates in the two-dimensional coordinate system. For example, coordinates of the speaker 106-1 may be the speaker 106-1 (x1, y1), coordinates of the speaker 106-2 may be the speaker 106-2 (x2, y2), and similarly, coordinates of the speaker 106-6 may be the speaker 106-6 (x6, y6). After the user carrying the mobile phone 105-1 enters the cabin of the vehicle 100, the vehicle head unit 101 may control the speakers 106-1 to 106-6 to play the ultrasonic detection signals, and determine that the ultrasonic detection signals are from the speaker 106-2, the speaker 106-3, and the speaker 106-4 based on signal characteristics of the ultrasonic detection signals received by the mobile phone 105-1. As shown in FIG. 8(b), differences tMA, tMB, and tMC of time when the ultrasonic detection signals played by the speaker 106-2, the speaker 106-3, and the speaker 106-4 arrive at the mobile phone 105-1 are obtained based on the following: a time point at which the vehicle head unit 101 controls the speaker 106-2 (a point A), the speaker 106-3 (a point B), and the speaker 106-4 (a point C) to simultaneously play the ultrasonic detection signals; and time points at which the ultrasonic detection signals separately played by the speaker 106-2, the speaker 106-3, and the speaker 106-4 arrive at the mobile phone 105-1 (a point M). Distance differences may be computed based on a propagation speed c (for example, 340 m/s) of the ultrasonic detection signals and the time differences between the ultrasonic detection signals. To be specific, differences in distances from the mobile phone 105-1 to the speaker 106-2, the speaker 106-3, and the speaker 106-4 are: dMA = c * tMA, dMB = c * tMB, and dMC = c * tMC. According to the principle of triangular intersection, the distances from the mobile phone 105-1 (the point M) to the three speakers form three circles, and a point of intersection of the three circles is the coordinates of the mobile phone 105-1 (the point M). The coordinates (x, y) of the mobile phone 105-1 (the point M) may be determined by solving the following system of equations: (x - x2)^2 + (y - y2)^2 - dMA^2 = 0, (x - x3)^2 + (y - y3)^2 - dMB^2 = 0, and (x - x4)^2 + (y - y4)^2 - dMC^2 = 0. The precise location of the mobile phone 105-1 in the cabin of the vehicle 100 is determined based on the coordinates (x, y) of the mobile phone 105-1 (the point M) in the two-dimensional coordinate system (the xy coordinate system) formed by the cabin of the vehicle 100.

It should be understood that although terms such as "first" and "second" may be used in this specification to describe various features, these features should not be limited by such terms. These terms are merely used for distinction, and should not be understood as an indication or implication of relative importance. For example, without departing from the scope of the example embodiments, a first feature may be referred to as a second feature, and similarly the second feature may be referred to as the first feature.

Furthermore, various operations are described as a plurality of separate operations in a manner that is most conducive to understanding illustrative embodiments. However, a described order should not be construed as implying that these operations need to depend on the described order. A plurality of these operations may be performed in parallel, concurrently, or simultaneously. In addition, the order of the operations may be rearranged. The processing may be terminated when the described operations are completed, but may further have additional operations not included in the figures. The processing may correspond to a method, a function, a procedure, a subroutine, a subprogram, or the like.

References to "an embodiment", "embodiments", "an illustrative embodiment", and the like in this specification indicate that the described embodiment may include a specific feature, structure, or property, but each embodiment may or may not necessarily include the specific feature, structure, or property. In addition, these phrases are not necessarily intended for a same embodiment. In addition, when specific features are described with reference to specific embodiments, knowledge of a person skilled in the art can affect combination of these features with other embodiments, regardless of whether these embodiments are explicitly described.

Unless otherwise stated, terms "contain", "have", and "include" are synonymous. The phrase "A/B" indicates "A or B". The phrase "A and/or B" indicates "(A), (B), or (A and B)".

As used in this specification, the term "module" may mean to be a part thereof, or include: a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another proper component that provides the function.

In the accompanying drawings, some structural or method features may be shown in a specific arrangement and/or order. However, it should be understood that such a specific arrangement and/or order may not be needed. In some embodiments, these features may be described in a manner and/or order different from that shown in the illustrative accompanying drawings. In addition, structural or method features included in a specific accompanying drawing do not mean that all embodiments need to include such features. In some embodiments, these features may not be included, or these features may be combined with other features.

The foregoing has described embodiments of this application in detail with reference to the accompanying drawings. However, use of the technical solutions of this application is not limited to the variety of application mentioned in embodiments of this application, and various structures and variations may be easily implemented with reference to the technical solutions of this application, to achieve various beneficial effects mentioned in this specification. Any variation made within the scope of knowledge possessed by a person of ordinary skill in the art without departing from the purpose of this application shall fall within the scope of this application.

## Claims

1. A positioning method, applied to an electronic device, wherein the method comprises:
obtaining an ultrasonic detection signal that is sent by at least one signal source and received by a mobile terminal, wherein the electronic device and the at least one signal source are located in a cabin of a vehicle;
determining, based on the ultrasonic detection signal, a target signal source that has sent the ultrasonic detection signal; and
determining a target location of the mobile terminal in the cabin of the vehicle based on a location of the determined target signal source in the cabin of the vehicle.

2. The method according to claim 1, wherein the method further comprises:
when the electronic device communicates with the mobile terminal, controlling a plurality of signal sources in the cabin of the vehicle to send the ultrasonic detection signals.

3. The method according to claim 2, wherein controlling the plurality of signal sources in the cabin of the vehicle to send the ultrasonic detection signals comprises:
controlling each of the plurality of signal sources to simultaneously send an ultrasonic detection signal group in a first sending period, wherein there is at least one measurement signal in the ultrasonic detection signal group sent by the different signal sources, and time at which the different signal sources send the measurement signal is different; and
determining, based on the ultrasonic detection signal, the target signal source that has sent the ultrasonic detection signal comprises:
determining, based on the measurement signal in the ultrasonic detection signal group received by the mobile terminal, a target signal source that has sent the ultrasonic detection signal group.

4. The method according to claim 3, wherein the ultrasonic detection signal group comprises a start signal, the measurement signal, and an end signal,
the start signal is sent at a start moment of the first sending period, the end signal is sent at an end moment of the first sending period, the measurement signal is sent at an identification moment between the start moment and the end moment, and
in the ultrasonic detection signal group sent by the different signal sources, a time interval between the identification moment and the start moment or the end moment varies.

5. The method according to claim 4, wherein determining, based on the measurement signal in the ultrasonic detection signal group received by the mobile terminal, the target signal source that has sent the ultrasonic detection signal group comprises:
determining that, in each ultrasonic detection signal group received by the mobile terminal, a time interval between sending time of the start signal and sending time of the measurement signal is a first time interval; and
determining that the first time interval is the same as a second time interval corresponding to a first signal source in the plurality of signal sources, and using the first signal source as the target signal source.

6. The method according to claim 4, further comprising:
determining that, in all ultrasonic detection signal groups received by the mobile terminal, time intervals between sending time of the start signals and sending time of the measurement signals comprise a third time interval and a fourth time interval, and
in an ultrasonic detection signal group received by the mobile terminal for the first time, a time interval between sending time of the start signal and sending time of the measurement signal is the third time interval; and
determining that the third time interval is the same as a fifth time interval corresponding to a second signal source in the plurality of signal sources, and using the second signal source as the target signal source.

7. The method according to claim 1, wherein determining the target location of the mobile terminal in the cabin of the vehicle based on the location of the determined target signal source in the cabin of the vehicle comprises:
using the location of the target signal source in the cabin of the vehicle as the target location of the mobile terminal.

8. The method according to claim 2, wherein that the electronic device communicates with the mobile terminal comprises:
the mobile terminal accesses a local area network covering the cabin of the vehicle.

9. The method according to claim 2, further comprising:
detecting that a door of the cabin of the vehicle is opened.

10. The method according to claim 1, wherein the electronic device is a head unit in the cabin of the vehicle.

11. A positioning method, applied to an electronic device, wherein the method comprises:
receiving an ultrasonic detection signal sent by at least one signal source, wherein the at least one signal source is located in a cabin of a vehicle;
determining, based on the ultrasonic detection signal, a target signal source that has sent the ultrasonic detection signal; and
determining a target location of the electronic device in the cabin of the vehicle based on a location of the determined target signal source in the cabin of the vehicle.

12. The method according to claim 11, further comprising:
when the electronic device communicates with a control end of the cabin of the vehicle, controlling, by the control end, a plurality of signal sources in the cabin of the vehicle to send the ultrasonic detection signals.

13. The method according to claim 12, wherein controlling, by the control end, the plurality of signal sources in the cabin of the vehicle to send the ultrasonic detection signals comprises:
controlling, by the control end, each of the plurality of signal sources to simultaneously send an ultrasonic detection signal group in a first sending period, wherein there is at least one measurement signal in the ultrasonic detection signal group sent by the different signal sources, and time at which the different signal sources send the measurement signal is different; and
determining, based on the ultrasonic detection signal, the target signal source that has sent the ultrasonic detection signal comprises:
determining, by the electronic device based on the measurement signal in the received ultrasonic detection signal group, a target signal source that has sent the ultrasonic detection signal group.

14. The method according to claim 13, wherein the ultrasonic detection signal group comprises a start signal, the measurement signal, and an end signal,
the start signal is sent at a start moment of the first sending period, the end signal is sent at an end moment of the first sending period, the measurement signal is sent at an identification moment between the start moment and the end moment, and
in the ultrasonic detection signal group sent by the different signal sources, a time interval between the identification moment and the start moment or the end moment varies.

15. The method according to claim 14, wherein determining, by the electronic device based on the measurement signal in the received ultrasonic detection signal group, the target signal source that has sent the ultrasonic detection signal group comprises:
determining that, in each received ultrasonic detection signal group, a time interval between sending time of the start signal and sending time of the measurement signal is a first time interval; and
determining that the first time interval is the same as a second time interval corresponding to a first signal source in the plurality of signal sources, and using the first signal source as the target signal source.

16. The method according to claim 14, further comprising:
determining that, in all received ultrasonic detection signal groups, time intervals between sending time of the start signals and sending time of the measurement signals comprise a third time interval and a fourth time interval, and
in an ultrasonic detection signal group received for the first time, a time interval between sending time of the start signal and sending time of the measurement signal is the third time interval; and
determining that the third time interval is the same as a fifth time interval corresponding to a second signal source in the plurality of signal sources, and using the second signal source as the target signal source.

17. The method according to claim 11, wherein determining the target location of the electronic device in the cabin of the vehicle based on the location of the determined target signal source in the cabin of the vehicle comprises:
using the location of the target signal source in the cabin of the vehicle as the target location of the electronic device.

18. The method according to claim 12, wherein that the electronic device communicates with the control end of the cabin of the vehicle comprises:
the electronic device accesses a local area network covering the cabin of the vehicle.

19. The method according to claim 12, further comprising:
detecting that a door of the cabin of the vehicle is opened.

20. The method according to claim 12, wherein the electronic device comprises at least one of a mobile phone and a tablet computer, and the control end comprises a head unit in the cabin of the vehicle.

21. An electronic device, comprising:
a memory, configured to store instructions to be executed by one or more processors of the electronic device, and
a processor, which is one of the processors of the electronic device and configured to perform the positioning method according to any one of claims 1 to 10 or any one of claims 11 to 20.

22. A computer storage medium, wherein the computer storage medium comprises computer program code used to perform the positioning method according to any one of claims 1 to 10 or any one of claims 11 to 20.

23. A computer program product, comprising a non-volatile computer-readable storage medium, wherein the non-volatile computer-readable storage medium comprises computer program code used to perform the positioning method according to any one of claims 1 to 10 or any one of claims 11 to 20.
